# EUROPÄISCHE PATENTANMELDUNG

(11) **EP 1 091 051 A1**
(43) Veröffentlichungstag der Anmeldung: **11.04.2001**
(21) Anmeldenummer: 00121675.3
(22) Anmeldetag: 04.10.2000
(51) Int. Cl.: E03C 1/046, A23L 2/54, C02F 1/68, B01F 3/04

(54) **Vorrichtung zur Abgabe von carbonisiertem Trinkwasser über einen Wasserhahn**

(30) Priorität: 05.10.1999 DE 19947820
(71) Anmelder: Linde Gas Aktiengesellschaft, 82049 Höllriegelskreuth (DE)
(72) Erfinder: Stoltze, Björn, Dipl.-Ing., 85764 Oberschleissheim (DE); Schmidtke, Wolfgang, 33102 Paderborn (DE)

(57) **Zusammenfassung**

Gegenstand der Erfindung ist eine Vorrichtung zur Abgabe von carbonisiertem Trinkwasser über einen Wasserhahn (14). Das Trinkwasser wird dabei dem herkömmlichen Leitungswassernetz (1) entnommen und in einem statischen Mischer, mit Kohlendioxid angereichert. Der statische Mischer (10) besteht aus mindestens einem Rohr, das mit Kugeln gefüllt ist. Vorzugsweise sind mehrere parallel angeordnete Rohrabschnitte vorgesehen, die nacheinander durchströmt werden. Insbesondere sind die Rohrabschnitte ineinandergeschoben.

## Beschreibung

Die Erfindung betrifft eine Vorrichtung zur zumindest zeitweisen Abgabe von carbonisiertem Trinkwasser über einen Wasserhahn, wobei der Wasserhahn mit einem statischen Mischer verbunden ist, der seinerseits mit dem Leitungswassernetz in Verbindung steht und an eine Kohlendioxidquelle angeschlossen ist.

Es sind schon verschiedene Methoden vorgeschlagen worden, um carbonisiertes Trinkwasser direkt einem an das herkömmliche Leitungswassernetz angeschlossenen Wasserhahn entnehmen zu können. Allen Methoden ist gemeinsam, daß das dem Leitungswassernetz entnommene Trinkwasser über eine Carbonisierungsstufe geführt wird, in der das Trinkwasser mit Kohlendioxid angereichert und Kohlendioxid im Trinkwasser gelöst wird. Das so carbonisierte Trinkwasser wird dann an einen Wasserhahn weitergeleitet. Ein wesentliches Problem besteht dabei dann, das Kohlendioxid in ausreichender Menge im Leitungswasser zur Lösung zu bringen. Dies wird insbesondere dadurch erschwert, daß im Haushaltsbereich nur beengte Platzverhältnisse zur Verfügung stehen. Beim Einbau der Carbonisierungseinrichtung in eine Küchenspüle, um das carbonisierte Leitungswasser direkt in der Küche dem Wasserhahn entnehmen zu können, bleibt bspw. nur ein verhältnismäßig kleiner Raum im Küchenspülenunterbau. Deshalb sind die bekannten für den industriellen Einsatz vorgesehenen Carbonisierungseinrichtungen, die zwar gute Carbonisierungsergebnisse erzielen, aber viel zu groß und sehr teuer sind, für den Haushaltsbereich ungeeignet.

In der WO 99/09264 wird vorgeschlagen, als Carbonisierungseinrichtung einen statischen Mischer einzusetzen. Einzelheiten über den Aufbau des statischen Mischers sind dieser Druckschrift jedoch nicht zu entnehmen. Wie sich herausgestellt hat, ist aber gerade die spezielle Ausgestaltung des statischen Mischers von entscheidender Bedeutung für eine zufriedenstellende Lösung des Kohlendioxids im Leitungswasser. Dabei arbeitet man an der Grenze des physikalisch mögliche, um eine ausreichende Carbonisierung zu erreichen.

Der vorliegenden Erfindung liegt die Aufgabe zugrunde, eine Vorrichtung der eingangs genannten Art so auszugestalten, daß auf wirtschaftliche Weise eine zufriedenstellende Lösung von Kohlendioxid im Leitungswasser gewährleistet wird.

Diese Aufgabe wird erfindungsgemäß dadurch gelöst, daß der statische Mischer mindestens ein Rohr aufweist, das mit Kugeln gefüllt ist.

Das Rohr hat zweckmäßigerweise einen Durchmesser von ca. 20 bis ca. 50 mm, besonders bevorzugt ca. 25 bis ca. 35 mm, und eine Gesamtwirklänge von ca. 0,2 bis ca. 1,5 m, besonders bevorzugt ca. 0,3 bis ca. 1,2 m, insbesondere 0,8 bis 1,0 m. Außerdem weisen die Kugeln vorzugsweise einen Durchmesser von ca. 1 bis ca. 10 mm, insbesondere ca. 2 bis ca. 5 mm, auf. Das Rohr ist vorzugsweise vertikal ausgerichtet.

Als vorteilhaft hat es sich erwiesen, daß mindestens zwei Rohrabschnitte parallel zueinander angeordnet sind, wobei deren Innenräume an mindestens einem Ende so miteinander verbunden sind, daß sie nacheinander vom Leitungswasser durchströmt werden können.

Gemäß einer besonders bevorzugten Ausgestaltung der Erfindung weist der statische Mischer mehrere ineinandergeschobene konzentrische Rohrabschnitte auf, deren Innenräume so miteinander verbunden sind, daß sie vom Leitungswasser nacheinander durchströmt werden können. Zweckmäßigerweise sind die Rohrabschnitte in abwechselnder Reihenfolge (entlang des Durchmessers gesehen) an den jeweils gegenüberliegenden Enden miteinander verbunden. Bevorzugt sind 2 ― 10, besonders bevorzugt 3 ― 5, Rohrabschnitte konzentrisch ineinandergeschoben. Dabei weist der innerste Rohrabschnitt vorteilhafterweise einen Durchmesser von ca. 10 bis ca. 30 mm, besonders bevorzugt von ca. 15 bis ca. 25 mm auf. Nach außen hin nehmen die Durchmesser vorzugsweise von Rohrabschnitt zu Rohrabschnitt um ca. 10 bis ca. 20 mm zu. Die Rohrabschnitte weisen jeweils eine Länge von bevorzugt ca. 0,2 ― 1 m, besonders bevorzugt ca. 0,3 - 0,5 m auf. Der innere Rohrabschnitt und die Zwischenräume zwischen den ineinandergeschobenen Rohrabschnitten sind jeweils mit Kugeln gefüllt, die vorzugsweise Durchmesser von ca. 1 bis ca. 10 mm, insbesondere ca. 2 bis ca. 5 mm, aufweisen. Der genannte aus den konzentrischen Rohrabschnitten bestehende statische Mischer ist vorzugsweise vertikal ausgerichtet, wobei am unteren Ende der Zulauf und am oberen Ende der Ablauf für das Leitungswasser angeordnet ist. Die Kugeln werden zweckmäßigerweise jeweils durch in Nähe des Zulaufs bzw. Ablaufs angebrachte Siebe oder Fritten in den Rohrabschnitten zurückgehalten.

Mit der Erfindung wird eine besonders effektive und wirtschaftliche, Vorrichtung zur Herstellung von carbonisiertem Leitungswasser zur Verfügung gestellt, die auch bei beengten Platzverhältnissen, insbesondere im Haushaltsbereich, eine sehr gute Kohlendioxidimprägnierung des Leitungswassers gewährleistet.

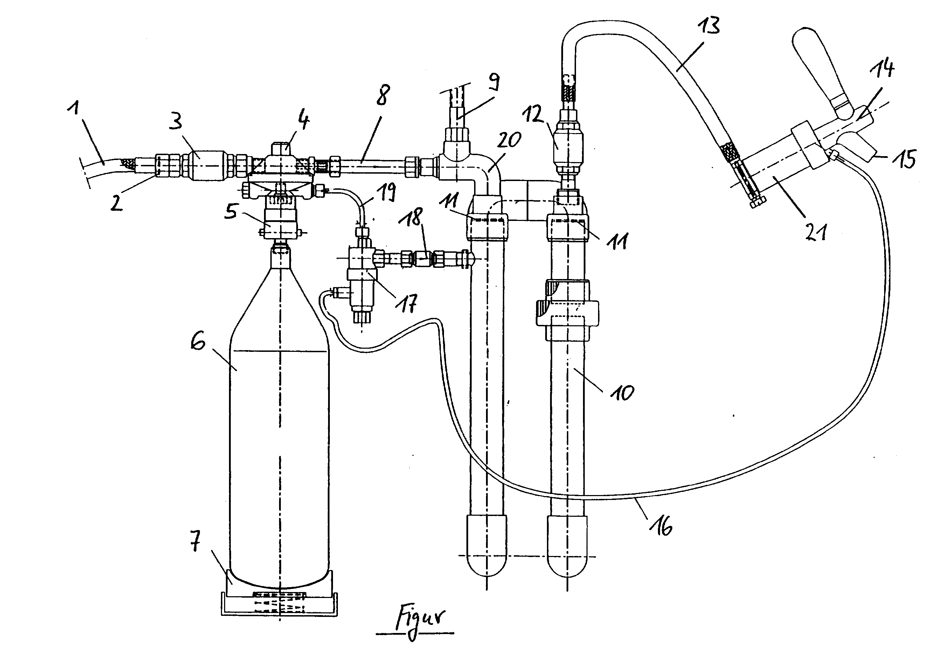

Im folgenden soll die Erfindung anhand eines in der Figur schematisch dargestellten Ausführungsbeispiels näher erläutert werden.

Leitungswasser wird über Leitung 1 dem herkömmlichen Leitungswassernetz entnommen und über einen Sieb 2 und ein Rückschlagventil 3 einer Gasdrosseleinrichtung 4 zugeführt. Die Gasdrosseleinrichtung 4 steht mit einem auf einer Kohlendioxidpatrone 6 sitzenden Patronenventil 5 in Verbindung. Die Kohlendioxidpatrone 6 ist mittels einer Halterung 7 in vertikaler Lage fixiert. Die Gasdrosseleinrichtung 4 wirkt derart auf das Patronenventil 5, daß der aus der Kohlendioxidpatrone 6 ausströmende Kohlendioxidvolumenstrom vom Leitungswasserdruck abhängt. Auf diese Weise wird gewährleistet, daß das Verhältnis der Mengenströme von Wasser und Kohlendioxid konstant gehalten wird. Das Leitungswasser wird über Leitung 8 einem Rohrstutzen 20 zugeführt, der eine Abzweigung 9 für nicht carbonisiertes Leitungswasser aufweist. Die Abzweigung 9 führt zu einer herkömmlichen Wasserhahnarmatur, über die übliches Kaltwasser und gegebenenfalls auch Warmwasser entnommen werden kann. An den Rohrstutzen 20 ist ein statischer Mischer 10 angeschlossen, der aus vier parallel und vertikal angeordneten Rohrabschnitten besteht, die strömungsmäßig miteinander verbunden sind. Die Rohrabschnitte weisen jeweils einen Durchmesser von 32 mm und eine Länge von 300 mm auf. Das Innere dieser Rohrabschnitte ist mit Kunststoffkugeln mit einem Durchmesser von 3 mm gefüllt. Die Kunststoffkugeln werden mittels Sieben 11 im Rohr zurückgehalten. Am Auslaß des statischen Mischers 10 ist ein Rückschlagventil 12 angeordnet, an das sich eine Zufuhrleitung 13 anschließt, die zu einem Wasserhahn 14 führt. Zwischen dem Rückschlagventil 12 und dem Wasserhahnauslaß 15 des Wasserhahns 14 ist eine Wasserdrosseleinrichtung, z.B. ein Drosselkegel, zum Druckabbau vorgesehen. Im vorliegenden Ausführungsbeispiel ist die Wasserdrosseleinrichtung in den Anschlußstutzen 21 des Wasserhahns 14 integriert. Zwischen der Wasserdrosseleinrichtung und dem Schließmechanismus, insbesondere dem Schließkegel, des Wasserhahns 14 zweigt eine Wirkdruckleitung 16 ab, die mit einem Druckschalter 17 in Verbindung steht. Der Druckschalter 17 ist andererseits über Leitung 19 und die Gasdrosseleinrichtung 4 mit dem Patronenventil 5 der Kohlendioxidpatrone 6 verbunden. Der Druckschalter 17 ist über ein Rückschlagventil 18 an den statischen Mischer 10 angeschlossen.

Die Wirkungsweise dieser Vorrichtung ist folgendermaßen:

An der Gasdrosseleinrichtung 4 liegt der übliche Leitungswasserdruck von ca. 3,5 bis ca. 4 bar an. Entsprechend wird Kohlendioxid aus der Kohlendioxidpatrone 6 über das Patronenventil 5 und die Leitung 19 dem Druckschalter 17 zugeführt. Bei geschlossenem Wasserhahn 14 liegt der genannte Leitungswasserdruck im gesamten System bis zum Wasserhahn 14 an. Falls carbonisiertes Leitungswasser dem Wasserhahnauslaß 15 entnommen werden soll, wird der Wasserhahn 14 geöffnet. Dadurch sinkt der Druck in der Zufuhrleitung 13 beispielsweise auf ca. 1,5 bar, so daß über die Wirkdruckleitung 16 der Druckschalter 17 geöffnet wird. Somit kann Kohlendioxid über das Rückschlagventil 18 in den statischen Mischer 10 strömen. Im statischen Mischer 10 wird das Leitungswasser mit Kohlendioxid angereichert und Kohlendioxid wird im Leitungswasser gelöst. Das carbonisierte Leitungswasser fließt über die Zufuhrleitung 13 zum Wasserhahn 14 und kann über den Wasserhahnauslaß 15 entnommen werden. Wird der Wasserhahn 14 wieder geschlossen, so baut sich in der Zufuhrleitung 13 wieder der übliche Leitungswasserdruck in Höhe von ca. 3,5 bis ca. 4 bar auf, so daß über die Wirkdruckleitung 16 der Druckschalter 17 wieder geschlossen wird. Das Rückschlagventil 12 dient dazu, daß bei Öffnen der Zweigleitung 9 zum Zapfen von herkömmlichem Kaltwasser der Druck in der Zufuhrleitung 13 nicht abfällt und damit der Druck in der Wirkdruckleitung gehalten wird. Die mit der Zweigleitung 9 verbundene Wasserhahnarmatur kann auch mit dem Wasserhahn 14 zur Abgabe von carbonisiertem Leitungswasser kombiniert werden, so daß durch eine einzige Wasserhahnarmatur sowohl herkömmliches Leitungswasser als auch carbonisiertes Leitungswasser abgegebenen werden kann. Außerdem kann in der Wirkdruckleitung 16 zusätzlich eine in der Figur nicht dargestellte Verzögerungseinrichtung eingebaut sein, die die Druckänderungen mit Zeitverzögerung an den Druckschalter 17 weitergibt.

Anstelle des in der Figur gezeigten, aus vier parallel angeordneten Rohrabschnitten aufgebauten statischen Mischers (10) wird gemäß einer in der Figur nicht dargestellten Variante des Ausführungsbeispiels ein aus konzentrisch ineinandergeschobenen Rohrabschnitten gebildeter statischer Mischer eingesetzt. Der statische Mischer besteht dabei aus drei Rohrabschnitten, die Durchmesser von 20 mm, 30 mm und 40 mm aufweisen und konzentrisch zueinander angeordnet sind. Der äußerste Rohrabschnitt weist am unteren Ende eine Zuführung für das Leitungswasser auf, während am oberen Ende des innersten Rohrabschnittes eine Abführung für das carbonisierte Leitungswasser angeordnet ist. Vom äußeren Rohrringraum zum mittleren Rohrringraum ist am oberen Ende der Rohrabschnitte ein Übergang zum Überströmen des Leitungswassers vorgesehen. Entsprechend ist am unteren Ende ein Übergang vom mittleren Rohrringraum zum inneren Rohrinnenraum vorhanden. Auf diese Weise wird ermöglicht, daß das Leitungswasser durch alle Rohrinnenräume hindurchströmt, wodurch bei kompakter Außenlänge des statischen Mischers ein für die Carbonisierung des Leitungswassers günstiger langer Strömungsweg und somit eine lange Aufenthaltsdauer im statischen Mischer erreicht wird. Als Füllmaterial für den statischen Mischer sind Kunststoffkugeln vorgesehen, die einen Durchmesser von 2 mm aufweisen. Die Kugeln werden mittels Fritten vom Zulauf und Ablauf des statischen Mischers zurückgehalten.

## Patentansprüche

1. Vorrichtung zur zumindest zeitweisen Abgabe von carbonisiertem Trinkwasser über einen Wasserhahn (14), wobei der Wasserhahn (14) mit einem statischen Mischer (10) verbunden ist, der seinerseits mit dem Leitungswassernetz (1) in Verbindung steht und an eine Kohlendioxidquelle (6) angeschlossen ist, **dadurch gekennzeichnet**, daß der statische Mischer (10) mindestens ein Rohr aufweist, das mit Kugeln gefüllt ist.

2. Vorrichtung nach Anspruch 1, dadurch gekennzeichnet, daß das Rohr einen Durchmesser von ca. 20 bis 50 mm, bevorzugt ca. 25 bis ca. 35 mm, und eine Gesamtwirklänge von ca. 0,2 bis ca. 1,5 m, bevorzugt ca. 0,3 bis ca. 1,2 m, insbesondere 0,8 bis 1,0 m, aufweist.

3. Vorrichtung nach Anspruch 1 oder 2, dadurch gekennzeichnet, daß mindestens zwei Rohrabschnitte parallel angeordnet sind und deren Innenräume an mindestens einem Ende derart miteinander verbunden sind, daß sie vom Leitungswasser nacheinander durchströmt werden können.

4. Vorrichtung nach einem der Ansprüche 1 bis 3, dadurch gekennzeichnet, daß die Kugeln einen Durchmesser von ca. 1 bis 10 mm, bevorzugt ca. 2 bis ca. 5 mm, aufweisen.

5. Vorrichtung nach einem der Ansprüche 1 bis 4, dadurch gekennzeichnet, daß mindestens zwei konzentrische Rohrabschnitte ineinandergeschoben sind und deren Innenräume so miteinander verbunden sind, daß sie vom Leitungswasser nacheinander durchströmt werden können.

6. Vorrichtung nach Anspruch 5, dadurch gekennzeichnet, daß 2 ― 10, vorzugsweise 3 ― 5, Rohrabschnitte konzentrisch ineinander geschoben sind.

7. Vorrichtung nach Anspruch 5 oder 6, dadurch gekennzeichnet, daß der innerste Rohrabschnitt einen Durchmesser von ca. 10 bis ca. 30 mm, vorzugsweise ca. 15 bis ca. 25 mm aufweist, und die Durchmesser der äußeren Rohrabschnitte jeweils um ca. 10 bis ca. 20 mm größer sind.

8. Vorrichtung nach einem der Ansprüche 5 bis 7, dadurch gekennzeichnet, daß die Rohrabschnitte eine Länge von ca. 0,2 bis ca. 1 m, vorzugsweise ca. 0,3 bis ca. 0,5 m aufweisen.

9. Vorrichtung nach einem der Ansprüche 1 bis 8, dadurch gekennzeichnet, daß das Rohr und/oder die Rohrabschnitte vertikal ausgerichtet sind.
